# EUROPEAN PATENT APPLICATION

(11) **EP 4 345 926 A2**
(43) Date of publication of application: **03.04.2024**
(21) Application number: 22185913.5
(22) Date of filing: 20.07.2022
(51) Int. Cl.: H01M 4/00

(54) **BATTERY SHELF, ENERGY STORAGE FRAME, AND ENERGY STORAGE BATTERY CLUSTER**

(30) Priority: 25.03.2022 CN 202210299209
(71) Applicant: CALB Co., Ltd., Changzhou City, Jiangsu Province (CN)
(72) Inventor: SHI, Tengteng, Luoyang City, Henan Province (CN); LI, Wei, Luoyang City, Henan Province (CN)
(74) Representative: Becker, Eberhard

(57) **Abstract**

The disclosure provides a battery shelf (100), an energy storage frame (200), and an energy storage battery cluster. The battery shelf (100) includes a side beam (10). The side beam (10) includes a main body (11). The main body (11) includes a top board (111), a bottom board (112), and a side board (113). The top board (111) is connected to a top end of the side board (113), the bottom board (112) is connected to a bottom end of the side board (113), and the top board (111) and the bottom board (112) are located on the same side of the side board (113). The top board (111) includes a first step surface (1111), a second step surface (1112), and a transitional connecting surface (1113) connected between the first step surface (1111) and the second step surface (1112).

## Description

### BACKGROUND

### Technical Field

The disclosure relates to the technical field of batteries, and in particular to a battery shelf, an energy storage frame, and an energy storage battery cluster.

### Description of Related Art

The energy storage equipment is a new energy equipment that stores a battery subrack in the energy storage frame. Specifically, the battery subrack is placed on the-battery shelf of the energy storage frame and is supported through the side beams of the battery shelf. However, the side beams currently in use are not strong enough to support a relatively large battery subrack.

### SUMMARY

The disclosure provides a battery shelf, which is used to support a battery subrack and includes a side beam. The side beam includes the following.

A main body is formed by bending a sheet metal part. The main body includes a top board, a bottom board, and a side board. The top board is connected to a top end of the side board, the bottom board is connected to a bottom end of the side board, and the top board and the bottom board are located on the same side of the side board. The top board includes a first step surface, a second step surface, and a transitional connecting surface connected between the first step surface and the second step surface. The first step surface is located above the second step surface. The second step surface is configured to support the battery subrack. The side board is configured to be connected to the energy storage frame.

The disclosure provides an energy storage frame, which includes at least one of the battery shelf.

The disclosure provides an energy storage battery cluster, which includes the energy storage frame and at least one battery subrack. The battery subrack is inserted into the energy storage frame.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic diagram of a three-dimensional structure of a battery shelf of the disclosure.
FIG. 2 is a schematic diagram of a first three-dimensional structure of a side beam in the battery shelf shown in FIG. 1.
FIG. 3 is a schematic diagram of a structure of the side beam shown in FIG. 2 from another perspective.
FIG. 4 is a schematic diagram of a side view structure of the side beam shown in FIG. 2.
FIG. 5 is a schematic diagram of a structure of a reinforcing member in the side beam shown in FIG. 2.
FIG. 6 is a schematic diagram of a main view structure of the reinforcing member shown in FIG. 5.
FIG. 7 is a schematic diagram of a second three-dimensional structure of a side beam in the battery shelf shown in FIG. 1.
FIG. 8 is a schematic diagram of a structure of the side beam shown in FIG. 7 from another perspective.
FIG. 9 is a schematic diagram of a side view structure of the side beam shown in FIG. 7.
FIG. 10 is a schematic diagram of a structure of a reinforcing member in the side beam shown in FIG. 7.
FIG. 11 is a schematic diagram of a main view structure of the reinforcing member shown in FIG. 10.
FIG. 12 is a schematic diagram of a three-dimensional structure of an energy storage frame of the disclosure.
FIG. 13 is a schematic diagram of a structure of an energy storage battery cluster of the disclosure.

### DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

### Embodiment 1

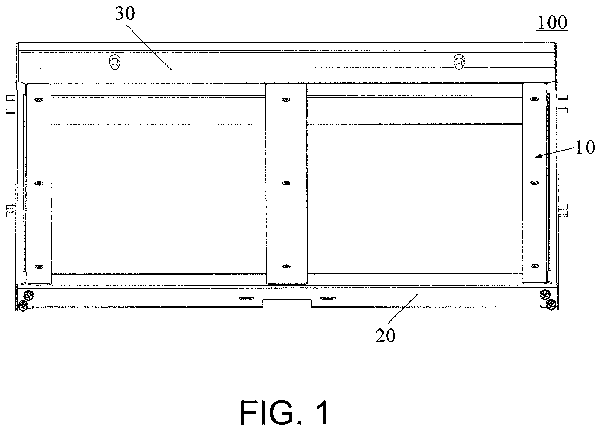

As shown in FIG. 1, the disclosure provides a battery shelf 100, which is used to support a battery subrack and includes a side beam 10. Specifically, the battery shelf 100 includes a front beam 20, a rear beam 30, and two side beams 10. The front beam 20, the rear beam 30, and the two side beams 10 surround to form the structure of a rectangular frame 201. The front beam 20 and the rear beam 30 are oppositely disposed, and the two side beams 10 are oppositely disposed. Preferably, the two side beams 10 have the same structure. The side beam 10 includes a main body 11.

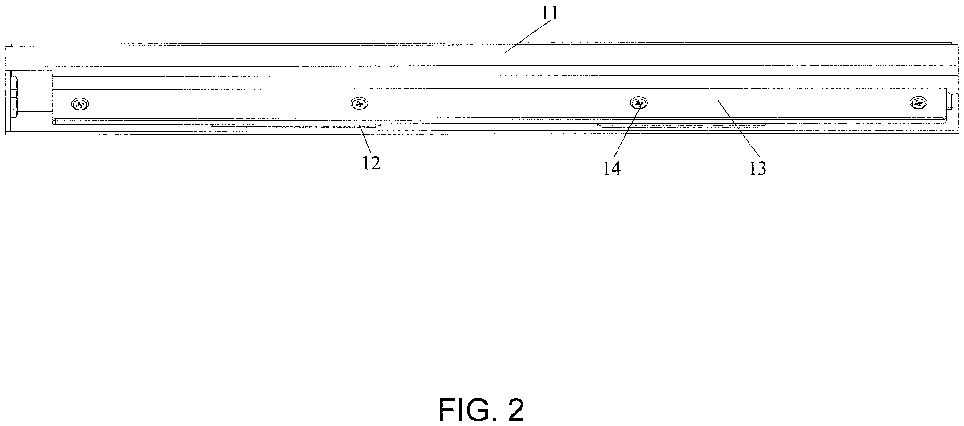

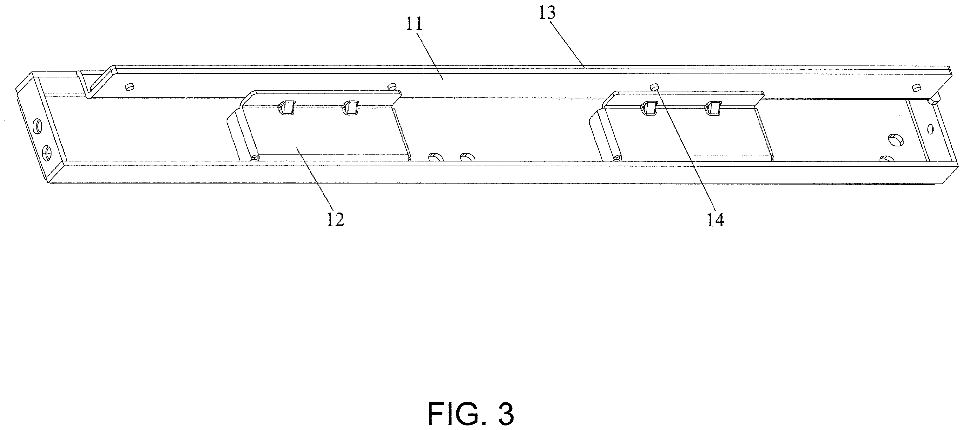

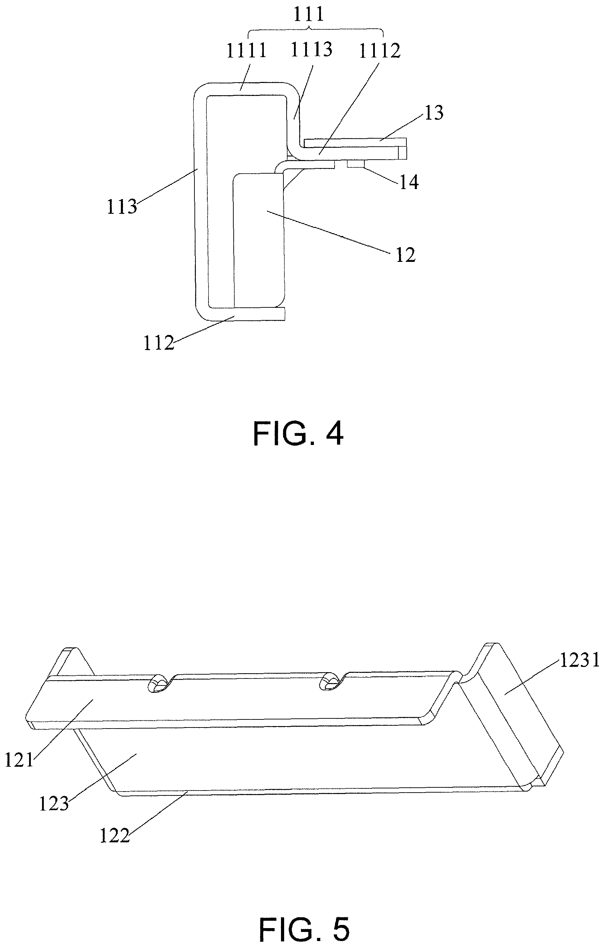

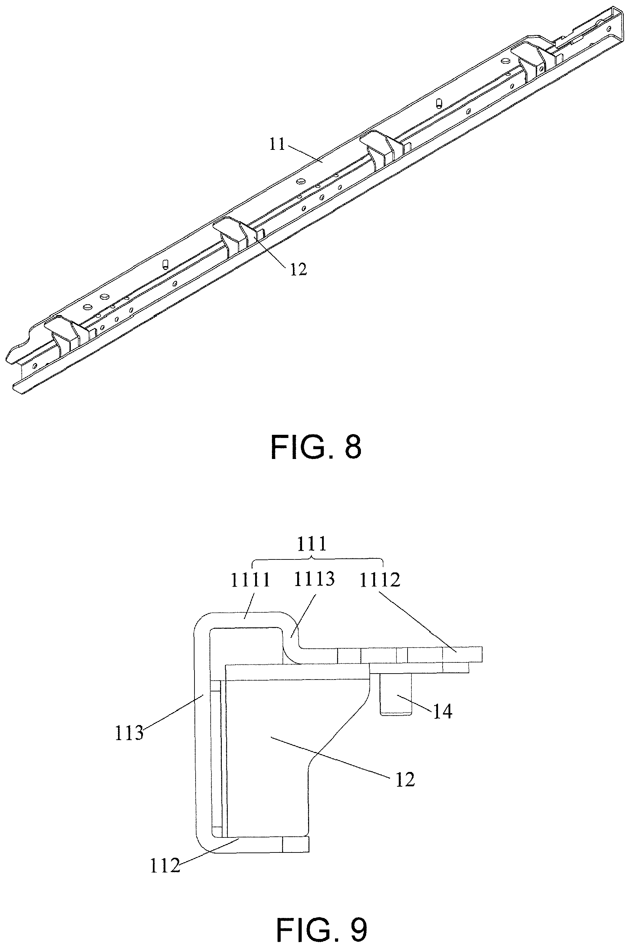

As shown in FIG. 2, FIG. 3, FIG. 4, FIG. 7, FIG. 8, and FIG. 9, the main body 11 is the main body 11 formed by bending sheet metal. The main body 11 includes a top board 111, a bottom board 112, and a side board 113, that is, the top board 111, the bottom board 112, and the side board 113 form an integral structure. The top board 111 is connected to a top end of the side board 113, the bottom board 112 is connected to a bottom end of the side board 113, and the top board 111 and the bottom board 112 are located on the same side of the side board 113, that is, the main body 11 is a hollow structure with one side open, that is, the cross-section of the main body 11 is C-shaped. Such a structure can improve the overall strength of the side beam 10. As shown in FIG. 4 and FIG. 9, the top board 111 is stepped. Specifically, the top board 111 includes a first step surface 1111, a second step surface 1112, and a transitional connecting surface 1113 connected between the first step surface 1111 and the second step surface 1112. The first step surface 1111 is located above the second step surface 1112. The second step surface 1112 is configured to support the battery subrack, that is, the battery subrack can be placed on the second step surface 1112. The transitional connecting surface 1113 can not only limit and guide the insertion operation of the battery subrack to prevent friction between the battery subrack and an energy storage frame 200 during the insertion process, so that the operation of inserting the battery subrack into the energy storage frame 200 becomes simple and convenient, but also buffer and protect the battery subrack to prevent the external force from directly impacting the battery subrack. The first step surface 1111 can ensure the overall usage strength of the side beam 10. The side board 113 is configured to be connected to the energy storage frame 200, that is, during the usage process, the side board 113 and the energy storage frame 200 are connected to implement the fixation between the battery shelf 100 and the energy storage frame 200. The battery subrack is placed on the top board 111 of the side beam 10 to implement the support for the battery subrack.

It should be noted that the setting number of reinforcing members 12 may be adaptively set according to the weight of the battery subrack actually borne by the side beam 10. For example, when the weight of the battery subrack is relatively large, multiple reinforcing members 12 disposed at intervals may be connected in the main body 11, and when the weight of the battery subrack is relatively small, only one reinforcing member 12 may be disposed at a middle position of the side beam 10, which will not be repeated here.

The battery shelf 100 of the disclosure improves the overall strength of the side beam 10 through bending the main body 11 into a structure with a C-shaped cross-section by adopting a sheet metal part.

Further, as shown in FIG. 4, the second step surface 1112 is connected to a plastic board, and the plastic board is used to support the battery subrack. Exemplarily, the plastic board is a polycarbonate (PC) board 13. The polycarbonate board 13 has good wear resistance and a smooth surface, which makes it easier for the battery subrack to be moved onto the battery shelf 100.

Of course, the plastic board may also be a polypropylene (PP) board or a polyethylene terephthalate (PET) board, as long as the friction between the battery subrack and the second step surface 1112 is reduced.

Further, the plastic board (the polycarbonate board 13) is connected to the second step surface 1112 through a connecting member 14. The connecting member 14 may be a bolt, a fixing pin, or a rivet. In the embodiment, the bolt is preferably adopted to facilitate the disassembly and the installation of the polycarbonate board 13, thereby facilitating the replacement of the polycarbonate board 13.

Specifically, a sink groove is provided on the polycarbonate board 13. The head of the bolt is embedded in the sink groove to ensure that the bolt does not protrude from the polycarbonate board 13, thereby ensuring the flatness of the surface of the polycarbonate board 13, thereby facilitating the movement of the battery subrack onto the battery shelf 100.

Further, as shown in FIG. 2, FIG. 3, FIG. 4, FIG. 7, FIG. 8, and FIG. 9, the height of the transitional connecting surface 1113 is less than the height of the battery subrack, so that the overall size of the side beam 10 does not take up too much space of the energy storage frame, thereby facilitating the improvement of the utilization rate of the energy storage frame.

Still further, the height of the transitional connecting surface 1113 is less than the height of the side board 113 to facilitate the assembly between the side board 113 and the energy storage frame 200.

Preferably, the height of the transitional connecting surface 1113 is 2 mm, which not only facilitates the assembly between the side board 113 and the energy storage frame 200, but also can limit and guide the insertion operation of the battery subrack, and facilitate easy processing and manufacturing.

It should be noted that the height of the transitional connecting surface 1113 may also be less than 2 mm or greater than 2 mm, such as 1.5 mm and 3 mm, as long as the height of the transitional connecting surface 1113 is less than the height of the side board 113.

In an embodiment, as shown in FIG. 2, FIG. 3, FIG. 4, FIG. 7, FIG. 8, and FIG. 9, the distance between the second step surface 1112 and the bottom board 112 is less than or equal to three-quarters of the height of the battery subrack, that is, the size of the opening of the C-shaped side beam 10 in the vertical direction is less than or equal to three-quarters of the height of the battery subrack. Also, the distance between the second step surface 1112 and the bottom board 112 is greater than the maximum outer diameter of the connecting member (the bolt), so that the bolt can be inserted into the interior of the side beam 10 without causing the overall size of the side beam 10 to be too large, thereby facilitating the improvement of the space utilization rate of the energy storage frame.

Further, the side beam 10 further includes the reinforcing member 12. The reinforcing member 12 is disposed in the main body 11. One end of the reinforcing member 12 is connected to the second step surface 1112, and the other end of the reinforcing member 12 is connected to the side board 113 and/or the bottom board 112. The reinforcing member 12 can further increase the strength of the side beam 10, so that the side beam 10 has sufficient supporting strength to support a large battery subrack.

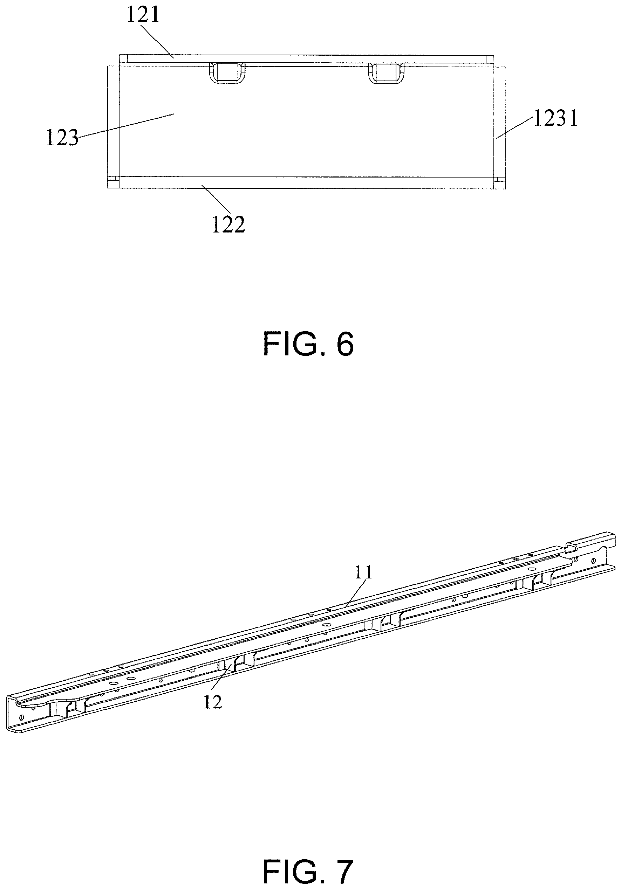

In a specific example of the embodiment, as shown in FIG. 5 and FIG. 6, the reinforcing member 12 includes a first connecting board 121, a second connecting board 122, and a third connecting board 123. The first connecting board 121 and the second connecting board 122 are connected to the two ends of the third connecting board 123, and the first connecting board 121 and the second connecting board 122 are located on the two sides of the third connecting board 123. Specifically, the third connecting board 123 is disposed parallel to the side board 113. The first connecting board 121 is connected to an upper end of the third connecting board 123, the second connecting board 122 is connected to a lower end of the third connecting board 123, and the first connecting board 121 and the second connecting board 122 are disposed parallel to each other. Preferably, the first connecting board 121, the second connecting board 122, and the third connecting board 123 form an integral structure. Specifically, the reinforcing member 12 is an integral structure formed by bending sheet metal. The first connecting board 121 is connected to the second step surface 1112, and the second connecting board 122 is connected to the bottom board 112. Specifically, the first connecting board 121 is connected to the second step surface 1112 by welding, and the second connecting board 122 is connected to the bottom board 112 by welding. The welding connection manner is simple and reliable, which can ensure the reliability of the connection between the reinforcing member 12 and the main body 11. Of course, the first connecting board 121 may also be connected to the second step surface 1112 through the rivet, and the second connecting board 122 may also be connected to the bottom board 112 through the rivet.

Further, as shown in FIG. 5 and FIG. 6, two sides of the third connecting board 123 are respectively provided with hems 1231. The hems 1231 are connected to the side board 113. Specifically, the hem 1231 is connected to the side board 113 by welding to improve the reliability of the connection between the connecting member 14 and the main body 11, thereby ensuring the overall strength of the side beam 10. Of course, the hem 1231 may also be bonded and connected to the side board 113 through glue. The two hems 1231 may extend toward each other or away from each other. Preferably, in order to facilitate processing and manufacturing, the two hems 1231 extend away from each other.

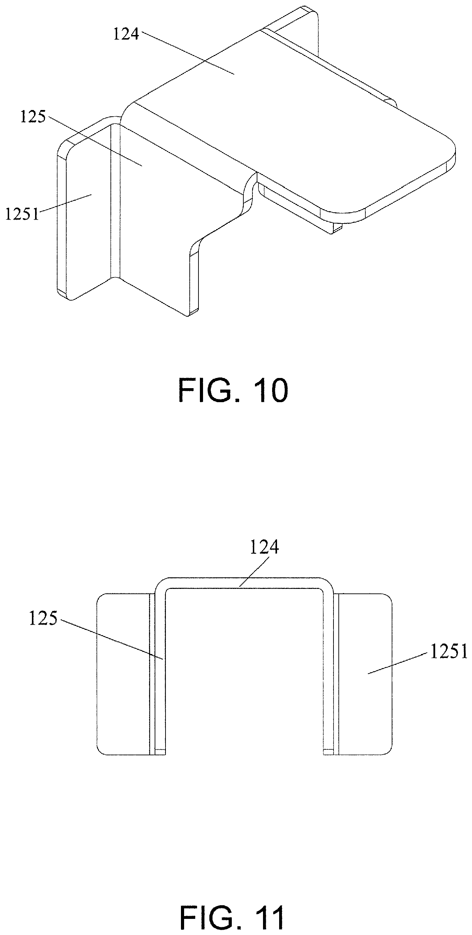

In another specific example of the embodiment, as shown in FIG. 10 and FIG. 11, the reinforcing member 12 includes a horizontal board 124 and two vertical boards 125. The two vertical boards 125 are respectively connected to the two sides of the horizontal board 124 and are located below of the horizontal board 124, that is, the reinforcing member 12 is a frame structure with an open bottom. Specifically, top surfaces of the two vertical boards 125 and an upper surface of the horizontal board 124 are located in the same plane. The upper surface of the horizontal board 124 abuts a bottom surface of the second step surface 1112. The two vertical boards 125 are both connected to the side board 113, and lower surfaces of the two vertical boards 125 abut an upper surface of the bottom board 112, such that the reinforcing member 12 can strengthen the support for the battery subrack placed on the second step surface 1112, so that the side beam 10 can stably support a large battery subrack.

Specifically, the two vertical boards 125 are connected to the side board 113 by welding to ensure the connection strength between the reinforcing members 12 and the side beams 10. Of course, the vertical boards 125 may also be connected to the side board 113 through the bolt or the rivet, as long as the reinforcing members 12 can be stably connected to the side beams 10.

Further, as shown in FIG. 10 and FIG. 11, one end of the vertical board 125 facing the side board 113 is provided with a flange 1251. The flange 1251 is connected to the side board 113. The flange 1251 can increase the connection strength between the vertical board 125 and the side board 113, thereby ensuring the reliability of the connection between the reinforcing member 12 and the main body 11.

It should be noted that in the embodiment, the reinforcing member 12 is an integral structure formed by bending sheet metal. Such a structure can ensure the overall strength of the reinforcing member 12. Of course, various components of the reinforcing member 12 may also be an integral structure connected by welding, which will not be repeated here.

### Embodiment 2

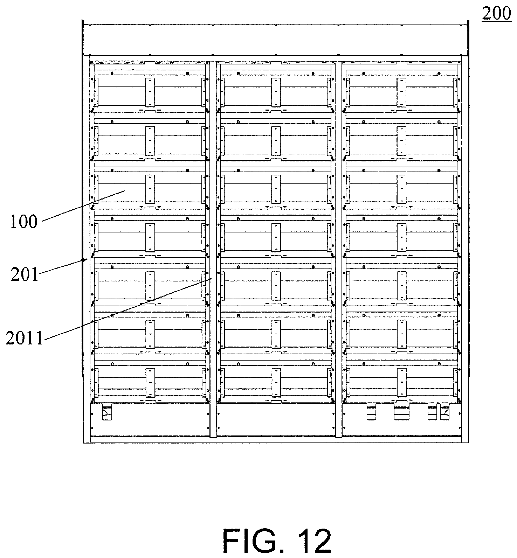

As shown in FIG. 12, the disclosure further provides an energy storage frame 200, which includes at least one of the battery shelf 100. Specifically, the energy storage frame 200 includes a frame 201. The battery shelf 100 is installed in the frame 201.

The energy storage frame 200 of the disclosure has the battery shelf 100, so the energy storage frame 200 has the advantage of being able to stably place a large battery subrack.

Further, the energy storage frame 200 further includes a column 2011. Specifically, the frame 201 includes the column 2011. A side beam 10 of the battery shelf 100 is connected to the column 2011. When multiple battery subracks need to be placed, the column 2011 is connected to multiple battery shelves 100 disposed at intervals from top to bottom. An inner space of the frame 201 is divided into multiple accommodating cavities through the battery shelves 100. One battery subrack may be inserted into each accommodating cavity. The battery subrack is supported through the battery shelf 100.

### Embodiment 3

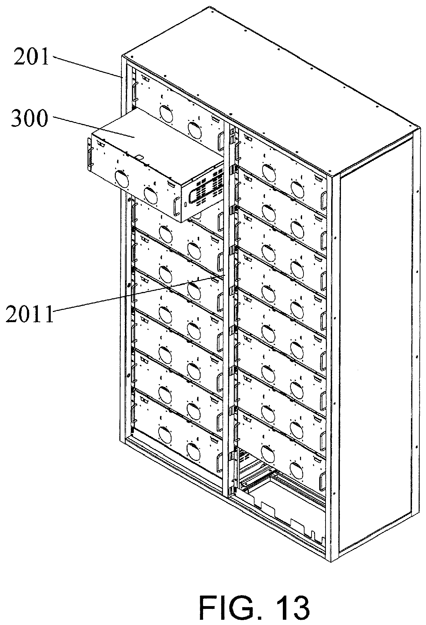

As shown in FIG. 13, the disclosure also provides an energy storage battery cluster, which includes the energy storage frame 200 and at least one battery subrack 300. The battery subrack 300 is inserted into the energy storage frame 200, wherein the placement number of battery subracks 300 may be adjusted according to actual usage requirements and the capacity of the energy storage frame 200.

The energy storage battery cluster of the disclosure has the energy storage frame, so the energy storage battery cluster has the advantage of stable placement of a large battery subrack.

In summary, the battery shelf of the disclosure improves the overall strength of the side beam through bending the main body into a structure with a C-shaped cross-section by adopting the sheet metal part, and further improves the strength of the side beam through disposing the reinforcing member in the main body, such that the side beam has sufficient supporting strength, so that the side beam can stably support a large battery subrack.

In the battery shelf of the disclosure, through designing the top board into a step shape, the first step surface of the top board can ensure the overall usage strength of the side beam. The battery subrack can be placed on the second step surface of the top board. The transitional connecting surface of the top board can not only limit and guide the insertion operation of the battery subrack to prevent friction between the battery subrack and the energy storage frame during the insertion process, so that the operation of inserting the battery subrack into the energy storage frame becomes simple and convenient, but also buffer and protect the battery subrack to prevent the external force from directly impacting the battery subrack.

In the battery shelf of the disclosure, through connecting the polycarbonate board onto the second step surface, the battery subrack can be more easily moved onto the battery shelf using the characteristic of the surface of the polycarbonate board being relatively smooth.

The energy storage frame of the disclosure has the battery shelf, so the energy storage frame has the advantage of being able to stably place a large battery subrack.

The energy storage battery cluster of the disclosure has the energy storage frame, so the energy storage battery cluster has the advantage of stable placement of a large battery subrack.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery shelf (100), used to support a battery subrack and comprising a side beam (10), wherein the side beam (10) comprises:
a main body (11), formed by bending a sheet metal part and comprising a top board (111), a bottom board (112), and a side board (113), wherein the top board (111) is connected to a top end of the side board (113), the bottom board (112) is connected to a bottom end of the side board (113), the top board (111) and the bottom board (112) are located on a same side of the side board (113), the top board (111) comprises a first step surface (1111), a second step surface (1112), and a transitional connecting surface (1113) connected between the first step surface (1111) and the second step surface (1112), the first step surface (1111) is located above the second step surface (1112), the second step surface (1112) is configured to support the battery subrack, and the side board (113) is configured to be connected to an energy storage frame (200).

2. The battery shelf (100) according to claim 1, wherein:
the side beam (10) further comprises a reinforcing member (12), the reinforcing member (12) is disposed in the main body (11), one end of the reinforcing member (12) is connected to the second step surface (1112), and other end of the reinforcing member (12) is connected to the bottom board (112) or the side board (113).

3. The battery shelf (100) according to claim 2, wherein:
the reinforcing member (12) comprises a first connecting board (121), a second connecting board (122), and a third connecting board (123), the first connecting board (121) and the second connecting board (122) are connected to two ends of the third connecting board (123), the first connecting board (121) and the second connecting board (122) are located on two sides of the third connecting board (123), the first connecting board (121) is connected to the second step surface (1112), and the second connecting board (122) is connected to the bottom board (112).

4. The battery shelf (100) according to claim 3, wherein:
the two sides of the third connecting board (123) are respectively provided with hems (1231), and the hems (1231) are connected to the side board (113).

5. The battery shelf (100) according to claim 2, wherein:
the reinforcing member (12) comprises a horizontal board (124) and two vertical boards (125), the two vertical boards (125) are respectively connected to two sides of the horizontal board (124) and are located below the horizontal board (124), an upper surface of the horizontal board (124) abuts the second step surface (1112), and the two vertical boards (125) are both connected to the side board (113).

6. The battery shelf (100) according to claim 5, wherein:
one end of the vertical board (125) facing the side board (113) is provided with a flange (1251), and the flange (1251) is connected to the side board (113).

7. The battery shelf (100) according to any one of claims 1-5, wherein:
a height of the transitional connecting surface (1113) is less than a height of the battery subrack.

8. The battery shelf (100) according to claim 7, wherein:
the height of the transitional connecting surface (1113) is less than a height of the side board (113).

9. The battery shelf (100) according to any one of claims 1-5, wherein:
a distance between the second step surface (1112) and the bottom board (112) is less than or equal to three-quarters of a height of the battery subrack.

10. The battery shelf (100) according to any one of claims 1-5, wherein:
a plastic board is connected onto the second step surface (1112), and the plastic board is used to support the battery subrack.

11. The battery shelf (100) according to claim 10, wherein:
the plastic board is connected onto the second step surface (1112) through a connecting member (14).

12. An energy storage frame (200), comprising at least one of the battery shelf (100) according to any one of claims 1-11.

13. The energy storage frame (200) according to claim 12, wherein the energy storage frame (200) further comprises a column (2011), and a side board (113) of the battery shelf (100) is connected to the column (2011).

14. An energy storage battery cluster, comprising the energy storage frame (200) according to claim 12 or 13 and at least one battery subrack (300), wherein the at least one battery subrack is inserted into the energy storage frame (200).
